# FASCICULE DE BREVET EUROPEEN

(11) **EP 3 904 664 B1**
(45) Date de publication et mention de la délivrance du brevet: **26.03.2025**
(21) Numéro de dépôt: 21169948.3
(22) Date de dépôt: 22.04.2021
(51) Int. Cl.: F02M 26/06, B01D 45/08, B01D 53/92, F01N 3/00, F01N 3/02, F02M 26/14, F02M 26/23, F02M 26/30, F02M 26/35, F28F 17/00, F01N 3/28, F28D 21/00

(54) **SIPHON A CONDENSATS-EGR**
SIPHON FÜR AGR-KONDENSATE
SIPHON FOR EGR-CONDENSATES

(30) Priorité: 28.04.2020 FR 2004196
(43) Date de publication de la demande: 03.11.2021
(73) Titulaire: NEW H POWERTRAIN HOLDING, S.L.U., 47008 Valladolid (ES)
(72) Inventeur: DUMAS, Eric, 78800 HOUILLES (FR)
(74) Mandataire: Renault Group

(56) Documents cités:
- EP-A1- 3 059 434
- WO-A1-2019/193014
- DE-A1- 102010 048 466
- DE-A1- 102016 104 382
- US-A1- 2008 028 757
- US-A1- 2011 079 002

## Description

### Domaine technique de l'invention

La présente invention concerne un moteur thermique de véhicule automobile.

La présente invention concerne un circuit d'échappement de gaz brulés de moteur thermique.

La présente invention concerne plus particulièrement un dispositif de gestion et de suppression des condensats notamment des condensats acides dans une ligne d'échappement de moteur thermique.

### Etat de la technique

De manière connue, un moteur thermique d'un véhicule automobile est équipé de systèmes de dépollution pour réduire les rejets de polluants à l'extérieur du véhicule. Lesdits systèmes de dépollution sont disposés dans la ligne d'échappement du moteur et comprennent un catalyseur ou un filtre à particules. On appelle ligne d'échappement d'un moteur tout le circuit des gaz brulés issus du moteur depuis des soupapes d'échappement.

Pour réduire des rejets de polluants générés par la combustion, il est connu de ramener des gaz brulés à l'échappement c'est-à-dire en aval de la combustion dans les cylindres, vers les conduits d'admission. On a ainsi différents types de gaz brulés recirculés prélevés dans la ligne d'échappement :
- des gaz recirculés haute pression prélevés depuis le circuit d'échappement en amont selon le sens d'écoulement des gaz de dispositifs de dépollution comme par exemple un catalyseur ou piège à oxyde d'azote (Nox). De manière générale, les gaz brulés recirculés haute pression sont prélevés directement depuis un collecteur d'échappement fixé à une face d'échappement de la culasse, du côté latéral opposé à la face d'admission. Les gaz recirculés haute pression sont envoyés ensuite vers les conduits d'admission ou dans le répartiteur d'admission.
- des gaz brulés recirculés basse pression prélevés dans le circuit d'échappement et de manière connue après un dispositif de dépollution. Lesdits gaz recirculés basse pression sont renvoyés de manière connue dans le circuit d'admission en amont du compresseur. Ils sont alors mélangés avec l'air frais capté en face avant du véhicule.

Les gaz brulés recirculés basse pression sont donc prélevés en aval d'un dispositif d'échappement et renvoyés vers l'admission du moteur. De manière connue, les gaz recirculés sont refroidis avant d'être mélangés avec de l'air frais capté en face avant du véhicule par exemple, ledit mélange est ensuite susceptible d'être compressé au passage d'un compresseur.

Des condensats sont susceptibles de se former dans le circuit de recirculation des gaz brulés basse pression notamment lors de l'arrêt du moteur. Lesdits condensats peuvent être formés d'eau, d'huile et rejets toxiques et corrosifs. Ils peuvent ensuite être véhiculés sous forme liquide lors du démarrage du moteur vers le compresseur et notamment dans la roue du compresser et endommager la roue par corrosion.

La publication EP2375047 -A2 présente ainsi un dispositif de réduction de composés corrosifs dans un condensat de gaz d'échappement d'un moteur à combustion interne, dans lequel les gaz d'échappement du moteur à combustion interne sont ramenés au moteur à combustion interne par l'intermédiaire d'un conduit de retour des gaz d'échappement composé d'un refroidisseur de gaz d'échappement et d'au moins un conduit de recirculation des gaz d'échappement. Le dispositif concerne un circuit de recirculation des gaz recirculés haute pression qui sont prélevés depuis un collecteur d'échappement pour être réintroduits à l'admission du moteur. Le dispositif comprend également une unité de neutralisation des composés corrosifs du condensat de gaz d'échappement agencée en aval du circuit de recirculation des gaz brulés et qui est traversée par les gaz d'échappement. Le dispositif peut être complexe et amène une surcharge supplémentaire au poids du moteur.

Le but de l'invention est de remédier à ces problèmes et un des objets de l'invention est un dispositif simple de gestion et de suppression des condensats formés lors de l'arrêt du moteur, en aval d'un dispositif de dépollution agencé sur une ligne d'échappement de moteur thermique sans altérer la circulation des gaz recirculés.

La publication EP3059434 -A1 et DE102010048466 -A1 divulgue un circuit de gaz brûlés recirculés basse pression d'un moteur thermique de véhicule automobile comprenant un dispositif de dépollution connecté aérauliquement en aval à une conduite de sortie d'échappement et à un refroidisseur de gaz brûlés connecté à un circuit de recirculation de gaz brûlés, le refroidisseur comprenant un circuit de suppression de condensats débouchant à une première extrémité située en aval du refoidisseur et à une seconde extrémité dans la conduite de sortie d'échappement et comportant un réservoir de rétention de condensats connecté à la conduite de sortie d'échappement par un conduit d'éjection de condensats. Il est prévu un moyen de contrôle du conduit d'éjection qui se présente sous la forme d'une vanne.

La publication US2008/028757-A1 divulgue un circuit de gaz brûlés recirculés basse pression similaire, mais dépourvu de réservoir et de moyen de contrôle du conduit d'éjection.

La publication DE102010048466 -A1 divulgue également un circuit de gaz brûlés recirculés basse pression similaire, mais dépourvu de moyen de contrôle du conduit d'éjection.

### Présentation de l'invention

La présente invention concerne plus particulièrement un circuit de gaz brulés recirculés basse pression d'un moteur thermique de véhicule automobile comprenant :
- un dispositif de dépollution connecté aérauliquement en aval à une conduite de sortie d'échappement et à
- un refroidisseur des gaz brulés connecté à un circuit de recirculation des gaz brulés,
,ledit refroidisseur comprenant un circuit de suppression de condensats débouchant à une première extrémité dans une extrémité aval du refroidisseur et à une seconde extrémité dans la conduite de sortie d'échappement, ledit circuit de suppression comportant en outre un réservoir de rétention des condensats et un conduit d'éjection des condensats connecté au réservoir de rétention et débouchant dans la conduite de sortie d'échappement.

La principale caractéristique du circuit selon l'invention est que le réservoir de rétention des condensats comprend un moyen de contrôle d'ouverture du conduit d'éjection, ledit moyen de contrôle comportant deux branches successives de circulation d'axe vertical et de sens opposé.

De manière avantageuse, un circuit de gestion et de suppression des condensats générés débouche par une première extrémité dans une extrémité aval du refroidisseur qui est la zone de formation desdits condensats, pour permettre le recueil, l'enlèvement puis l'acheminement des condensats contenus dans les gaz recirculés vers une seconde extrémité débouchant dans la conduite de sortie d'échappement pour être rejetés vers l'extérieur et ainsi éviter la pollution d'une roue de compresseur vers laquelle sont dirigés les gaz recirculés après leur passage dans le refroidisseur. Les condensats sont ainsi supprimés sans accès vers le moteur, notamment vers une roue de compresseur d'air du moteur.

Selon d'autres caractéristiques de l'invention,
- le circuit de suppression des condensats comporte des moyens de recueil des condensats agencés dans le carter du refroidisseur à l'extrémité aval dudit carter.

De manière avantageuse, le circuit de suppression comporte des moyens destinés à recueillir des condensats depuis les gaz recirculés. Lesdits moyens sont agencés dans le carter du refroidisseur et à une extrémité aval dudit refroidisseur pour permettre un recueil optimal desdits condensats et un encombrement réduit.
- les moyens de recueil comprennent une paroi de recueil agencée à une extrémité aval du dispositif de refroidissement et vers laquelle sont dirigés les gaz recirculés, et une poche de recueil agencée au pied de ladite paroi de recueil.

De manière avantageuse, les moyens de recueil des condensats comportent au moins une paroi de recueil agencée à une extrémité aval du dispositif de refroidissement et vers laquelle sont dirigés les gaz recirculés. Lesdits gaz recirculés viennent buter contre la paroi de recueil pour permettre une séparation et un recueil des polluants, les condensats sont aptes à s'écouler par gravité le long de la paroi de recueil vers la poche de recueil agencée au pied de ladite paroi.
- les moyens de recueil comprennent un déflecteur agencé à l'extrémité aval dudit refroidisseur pour cacher le débouché du circuit de suppression dans le carter de refroidisseur.

De manière avantageuse, les moyens de recueil des condensats comprennent un déflecteur destiné à cacher le débouché du circuit de suppression dans le carter du refroidisseur et plus particulièrement la poche de recueil des gaz recirculés afin de ne pas perturber le fonctionnement du refroidisseur et le passage des gaz brulés.
- les moyens de recueil comprennent un impacteur agencé dans le carter de refroidisseur.

De manière avantageuse, un impacteur dans le carter de refroidisseur, notamment en sortie permet de capter le maximum de maximum de liquide présent dans le gaz échappement refroidi.
- le circuit de suppression des condensats comporte un réservoir de rétention de condensats.

De manière avantageuse, le circuit de contrôle comporte un réservoir de rétention pour garder les condensats notamment en cas d'arrêt du moteur et éviter des remontées de condensats dans le carter du refroidisseur.
- le réservoir des condensats est agencé en dessous du carter de refroidisseur.

De manière avantageuse, le réservoir de rétention est agencé en dessous du carter de refroidisseur c'est-à-dire à un niveau inférieur dudit carter selon un axe vertical Z, pour permettre une évacuation simple par gravité des condensats recueillis dans ledit carter.
- le circuit de suppression comprend un conduit d'éjection des condensats connecté au réservoir de rétention débouchant dans la conduite de sortie d'échappement.

De manière avantageuse, le réservoir de condensats est connecté avec la conduite de sortie d'échappement par un conduit d'éjection, ce qui permet d'agencer de manière optimale ledit réservoir et de réduire le chemin des condensats.
- le réservoir de rétention comprend un moyen de contrôle d'ouverture du conduit d'éjection.

De manière avantageuse, le réservoir de rétention comprend un moyen de contrôle d'ouverture du conduit d'éjection des condensats pour éviter un rejet en continu desdits condensats pouvant entrainer une circulation des gaz recirculés par le circuit de contrôle et donc de court-circuiter le circuit de recirculation des gaz brulés EGR.
- le moyen de contrôle comprend un conduit de circulation des condensats comportant deux branches successives de circulation d'axe vertical et de sens opposé.

De manière avantageuse, le moyen de contrôle peut être formé de deux branches de circulation successives d'axes parallèles, notamment verticaux, et de sens opposés aptes à empêcher un passage des gaz recirculés au travers du circuit de suppression.
- le conduit de circulation présente une partie en permanence immergée apte à empêcher le passage des gaz.

De manière avantageuse, le conduit de circulation présente une partie en permanence immergée et remplie par les condensats empêchant le passage des gaz brulés recirculés au travers dudit conduit.
- Le moyen de contrôle est conformé pour présenter des résistances à la circulation des gaz supérieures aux résistances de circulation des gaz par la sortie des gaz brulés du carter du refroidisseur.

De manière avantageuse, le moyen de contrôle présente des caractéristiques dimensionnelles générant des résistances à la circulation des gaz, ici les gaz brulés recirculés, supérieures à celles du circuit de recirculation des gaz brulés, pour privilégier pour les gaz brulés recirculés de passer par le circuit de recirculation des gaz brulés dit circuit EGR au lieu du circuit de suppression des condensats.
- le moyen de contrôle comprend un clapet d'ouverture piloté apte à obturer/ouvrir le débouché
des condensats dans la conduite de sortie d'échappement.

De manière avantageuse, le moyen de contrôle comprend un clapet d'ouverture qui peut être piloté par un actuateur de pilotage, pour contrôler le passage des condensats dans la conduite de sortie d'échappement et éviter un refoulement desdits condensats dans le réservoir. Le clapet est un clapet de contre-pression.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
[Fig. 1] est une vue schématique du moteur avec les éléments du circuit de gaz.
[Fig. 2] est une vue schématique de coupe du circuit de gaz recirculés basse pression comprenant successivement un dispositif de dépollution et un refroidisseur de gaz recirculés avec le sens de circulation desdits gaz.
[Fig. 3] est une vue schématique de coupe du circuit de gaz recirculés basse pression comprenant successivement un dispositif de dépollution et un refroidisseur de gaz recirculés avec un circuit de suppression des condensats selon un mode de réalisation.
[Fig. 4] est une vue schématique de coupe du circuit de gaz recirculés basse pression comprenant successivement un dispositif de dépollution et un refroidisseur de gaz recirculés avec un circuit de suppression des condensats selon un autre mode de réalisation.

Dans la description qui va suivre, des chiffres de référence identiques désignent des pièces identiques ou ayant des fonctions similaires.

Les termes haut/bas sont relatif à un axe vertical orthogonal à un plan horizontal qui peut être le plan du véhicule (non représenté) passant par les essieux des roues du véhicule.

De même, les termes amont/aval sont relatif au sens d'écoulement des gaz brulés dans le circuit de recirculation des gaz.

De manière connue, un groupe motopropulseur de véhicule automobile tel que pour l'invention peut comporter un moteur thermique avec des accessoires destinés à améliorer la performance dudit moteur thermique ou à assurer le fonctionnement du moteur ; lesdits accessoires comprennent par exemple un turbocompresseur avec un étage de turbine et un étage de compresseur, un refroidisseur de gaz, un échangeur de chaleur eau/gaz.

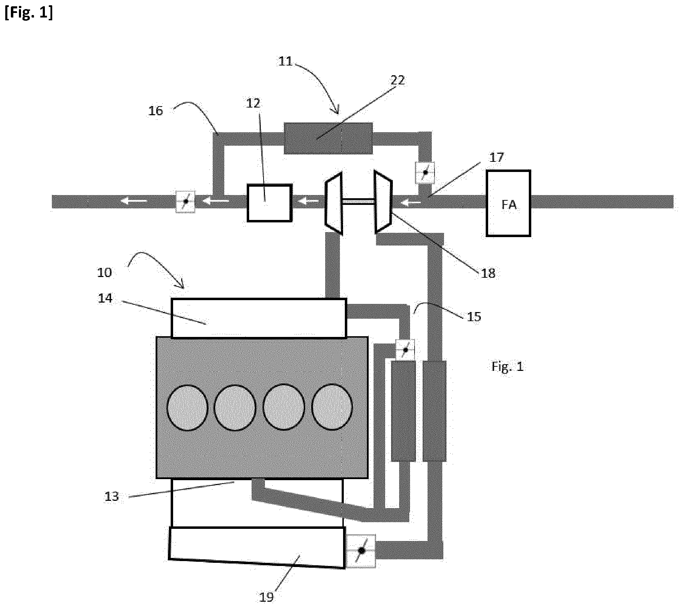

Selon la figure 1, le moteur thermique 10 du véhicule automobile (non représenté) comprend un circuit de gaz brulés recirculés 11 prélevés depuis l'échappement 14 du moteur pour les renvoyer vers l'admission 13 du moteur 10 afin de réduire les rejets de polluants. On peut voir deux circuits de gaz recirculés :
- un premier circuit de gaz 15 brulés dits haute pression qui sont prélevés depuis le collecteur d'échappement du moteur et amenés directement à l'admission dudit moteur,
- un deuxième circuit de gaz 16 recirculés dits basse pression qui sont prélevés depuis ou en aval d'un dispositif de dépollution 12. Ledit dispositif de dépollution peut être un filtre à particules ou un catalyseur ou un piège à Nox pour oxyde d'azote. Les gaz brulés traversent ensuite un refroidisseur de gaz qui peut être un échangeur de chaleur eau/gaz pour être ensuite dirigés vers successivement un conduit d'admission 17 d'air frais dans lequel ils sont mélangés avec l'air frais issu d'un captage en général depuis la face avant du véhicule, un compresseur 18, un refroidisseur d'air de suralimentation à eau 19 connu sous le nom de Water CAC en anglais, avant d'atteindre la face d'admission du moteur et les conduits d'admission (non représentés) menant aux cylindres dudit moteur.

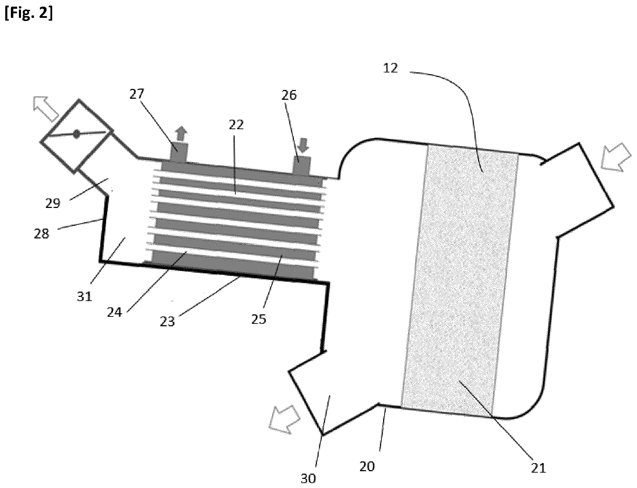

Selon la figure 2, le dispositif de dépollution 12 comprend un carter de dépollution 20 entourant un pain 21 de dépollution. Le dispositif de dépollution comprend deux connexions en aval : une première connexion avec un refroidisseur 22 des gaz brulés qui seront ensuite dirigés dans le circuit de recirculation des gaz brulés, et une seconde connexion avec une conduite de sortie 30 d'échappement par laquelle les gaz brulés sont rejetés hors du moteur.

Les gaz recirculés sont à haute température. Ils traversent le pain de dépollution pour enlever de leur toxicité et entrent ensuite dans le refroidisseur 22 pour abaisser leur température avant le mélange avec l'air frais. Le refroidisseur 22 est généralement un échangeur de chaleur eau/gaz et comprend un carter de refroidisseur 23 entourant des tubes cylindriques 24 baignant dans un volume d'eau 25 alimenté par un embout d'entrée 26 et un embout de sortie 27, lesdits deux embouts sont connectés à un circuit de refroidissement à base d'eau (non représenté) du moteur.

Dans les tubes cylindriques 24 passent les gaz recirculés pour donner une partie de leur chaleur à l'eau. Les gaz viennent frapper à une extrémité aval 31 une paroi 28 d'un entonnoir menant à l'embouchure 29 de sortie du refroidisseur 22.

A l'arrêt et pendant l'arrêt du moteur, des condensats essentiellement liquides composés d'eau avec éventuellement des composants corrosifs et de l'huile peuvent se déposer dans le carter 23 de refroidisseur 22 essentiellement à son extrémité aval 31. Lesdits condensats peuvent ensuite au démarrage du moteur être entrainés vers le compresseur et polluer la roue du compresseur avec les composants nocifs et corrosifs, pouvant entrainer des pannes du moteur.

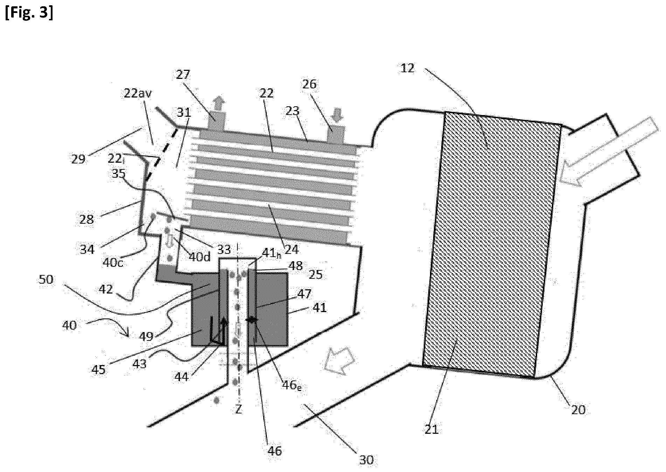

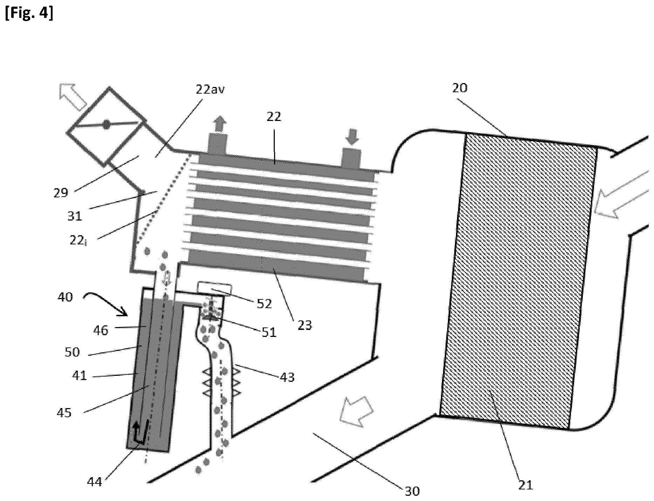

Selon un mode préféré de réalisation de l'invention représenté en figures 3 et 4, le refroidisseur 22 comprend un circuit de contrôle et de suppression 40 des condensats 40c pour recueillir, stocker, et supprimer lesdits condensats. Le circuit de contrôle 40 comprend des moyens pour recueillir les condensats. Lesdits moyens comprennent la paroi 28 en extrémité aval qui présente une surface inclinée et une poche de recueil 33 agencée en bas de la paroi de recueil 28. Ladite poche de recueil peut être par exemple un évidement creusé dans la paroi inférieure 34 du carter 23 de refroidisseur.

Comme représenté en figures 3 et 4, lesdits moyens de recueil peuvent comprendre un impacteur 22ᵢ formé par une grille, agencé à l'intérieur du carter 23 du refroidisseur et recouvrant la sortie 22ₐᵥ du refroidisseur 22. Ledit impacteur permet de capter le maximum de liquide présent dans le gaz d'échappement refroidi.

Selon la figure 3, les moyens de recueil peuvent comprennent un déflecteur 35. De manière préférentielle, le déflecteur 35 s'étend depuis la paroi inférieure 34 . Il peut être formé par une feuille issue de matière avec le carter de refroidisseur 22. Ledit déflecteur 35 permet de cacher la poche de recueil 33 pour les gaz recirculés et notamment le débouché 40_{d} du circuit de suppression des condensats dans le carter 23. Lesdits gaz recirculés sont ainsi dirigés à la sortie des tubes cylindriques vers la paroi de recueil à l'extrémité aval, et au-dessus de la poche de recueil 33.

Le circuit de contrôle 40 comprend également un réservoir de rétention 41 des condensats. Ledit réservoir est agencé de manière préférentielle en appui contre la paroi du carter 20 du dispositif de dépollution 12 et en dessous du carter 23 du refroidisseur 22, c'est-à-dire à un niveau inférieur dudit carter 23 selon un axe vertical Z, pour permettre une évacuation simple par gravité des condensats recueillis dans lecarter du refroidisseur.

Un conduit de stockage 42 connecte le carter 23 du refroidisseur 22 au réservoir de rétention 41. Plus précisément le conduit de stockage débouche à une première extrémité dans la poche de recueil 33 du carter 23 et à la deuxième extrémité opposée dans le réservoir 41. L'axe du conduit de stockage 42 est sensiblement vertical ou oblique par rapport à l'axe vertical Z et le réservoir de rétention 41 est ainsi agencé au plus bas du carter 23 et du conduit de stockage 42. Les condensats peuvent ainsi s'écouler par gravité depuis la poche de recueil 33 jusqu'au réservoir de rétention 41.

Selon les figures 3et 4, le circuit de suppression 40 comprend un conduit d'éjection 43 des condensats connecté au réservoir de rétention 41 et débouchant dans la conduite de sortie d'échappement 30.

De manière avantageuse, le circuit de suppression 40 des condensats comporte un moyen de contrôle 50 d'ouverture du conduit d'éjection 43.

Ledit moyen de contrôle 50 est apte à laisser passer les condensats liquides dans la conduite de sortie d'échappement 30 tout empêchant la circulation des gaz brulés en aval du refroidisseur vers ladite même conduite de sortie.

Le moyen de contrôle 50 comprend un conduit de circulation 44 des condensats comportant deux branches successives 45, 46 et connectées l'une à l'autre de circulation d'axe sensiblement vertical et de sens opposé. Les deux branches 45,46 forment une circulation en U. Les deux branches 45,46 forment un siphon 47.

En fonctionnement, le conduit de circulation 44 présente une partie basse, notamment le creux du U, en permanence immergée dans les condensats et apte à empêcher le passage des gaz brulés recirculés.

Le moyen de contrôle 50 est conformé pour présenter des résistances à la circulation des gaz supérieures aux résistances de circulation des gaz par le circuit de recirculation des gaz brulés. Le moyen de contrôle présente des caractéristiques dimensionnelles générant des résistances à la circulation des gaz, ici les gaz brulés recirculés, supérieures à celles du circuit de recirculation des gaz brulés, pour privilégier pour les gaz brulés recirculés de passer par le circuit de recirculation des gaz brulés dit circuit EGR au lieu du circuit de suppression des condensats.

Selon un exemple de mode de réalisation en figure 3, le conduit d'éjection 43 ou de trop-plein traverse le réservoir de rétention 41 depuis une première extrémité basse et déborde dudit réservoir à l'extrémité opposée d'une hauteur de débordement 48 qui est définie en fonction de l'environnement et de l'implantation du système. Le moyen de contrôle 50 comprend un capuchon 49 cylindrique qui déborde également du réservoir de rétention 41 et recouvre le conduit d'éjection 43. Le capuchon présente un plus gros diamètre et est enfoncé dans le même réservoir de rétention. Le conduit d'éjection 43 et le capuchon 49 sont sensiblement coaxiaux. Le capuchon 49 entoure le conduit d'éjection 43 sur une longueur déterminée dans le réservoir. Le capuchon ne s'étend pas sur la totalité de la hauteur 41ₕ du réservoir et dévoile un passage de liquide avec une hauteur définissant la hauteur de siphon 47. La première branche 45 de circulation est délimitée entre le réservoir et le capuchon, la seconde branche 46 de circulation est délimitée entre le capuchon et le conduit d'éjection et présente une épaisseur 46ₑ. Le capuchon délimite une chambre de contrôle de débit gazeux dont la hauteur est définie entre l'extrémité haute du conduit d'éjection et le capuchon. Ladite hauteur de chambre peut être de l'ordre de quelques mm, entre 2 et 10 mm.

La hauteur de siphon peut être inférieure à 5 mm. L'épaisseur entre le tube d'éjection et le capuchon peut être entre 3 et 10 mm. Les dimensions de hauteur de siphon 47 et d'épaisseur de seconde branche 46ₑ permettent de réguler le débit des condensats liquides.

De manière préférentielle, le conduit d'éjection 43 est en acier inoxydable de même type que les conduits de circulation des gaz EGR.

Les caractéristiques dimensionnelles du siphon 47 sont définies selon les moteurs de façon à ce que la contre pression générée en phase gazeuse soit plus élevée que la pression dans le refroidisseur.

Selon un autre mode de réalisation représenté en figure 4, le moyen de contrôle 50 est formé par le tube de stockage 42 qui plonge dans le réservoir de rétention de telle manière que l'axe du tube de stockage est sensiblement parallèle à une arête verticale du réservoir. De façon simple, le réservoir est cylindrique et le tube de stockage est disposé de façon à ce que le réservoir de rétention 43 et le tube de stockage 42 sont coaxiaux. La hauteur du tube de stockage 42 à l'intérieur du réservoir est intérieur à la hauteur dudit réservoir de rétention laissant un espace en bas du réservoir 43. Les deux branches de circulation des condensats liquides sont donc formées par le tube de stockage puis l'espace entre le réservoir de rétention et le tube de stockage. On déterminera les caractéristiques du siphon de manière analogue au premier mode de réalisation décrit ci-avant. De manière préférentielle, le réservoir de rétention comprend une ouverture radiale connectée avec le tube d'éjection pour le passage des condensats en trop-plein.

De manière préférentielle, un clapet d'ouverture 51 piloté est disposé dans le tube d'éjection, et est apte à obturer/ouvrir le débouché des condensats dans la conduite de sortie d'échappement. Le clapet est un clapet de contre pression est ajouté en sortie du réservoir.

Ce clapet peut être piloté via un actuateur 52 pour contrôler le passage des condensats dans la conduite de sortie d'échappement et éviter un refoulement desdits condensats dans le réservoir.

Le fonctionnement du circuit de contrôle s'effectue comme suit :
Lors de l'arrêt et également pendant l'arrêt du moteur, les gaz recirculés génèrent des condensats qui sont recueillis sur la paroi inclinée 28 à l'extrémité aval du refroidisseur 22. Les condensats sous forme liquide s'écoulent sur cette paroi inclinée jusqu'à la poche de recueil 33 en passant en dessous de déflecteur 35. Les condensats pénètrent dans le conduit de stockage 42 pour être dirigés vers le réservoir de rétention 41 par gravité.

En cas de trop plein dans le réservoir de rétention, les condensats liquides sont éjectés par le conduit d'éjection 43.

Le moyen de contrôle 50 comprenant le siphon 47 permet l'évacuation des condensats liquides tout en préservant la circulation des gaz brulés recirculés vers l'admission du moteur.

L'objectif est atteint : le circuit de gaz brulés recirculés basse pression comprend un circuit de suppression des condensats formés dans le carter du refroidisseur lors de l'arrêt du moteur.

Ledit circuit de contrôle permet de façon aisée de stocker les condensats lors de l'arrêt du moteur et de les supprimer de façon simple.

## Revendications

1. Circuit de gaz brulés (16) recirculés basse pression d'un moteur thermique de véhicule automobile comprenant :
- un dispositif de dépollution (12) connecté aérauliquement en aval à une conduite de sortie d'échappement (30) et à
- un refroidisseur des gaz brulés (22) connecté à un circuit de recirculation des gaz brulés,
ledit refroidisseur (22) comprenant un circuit de suppression (40) des condensats débouchant à une première extrémité dans une extrémité aval (31) du refroidisseur et à une seconde extrémité dans la conduite de sortie d'échappement (30), ledit circuit de suppression (40) comportant en outre un réservoir de rétention (41) des condensats et un conduit d'éjection des condensats connecté au réservoir de rétention (41) et débouchant dans la conduite de sortie d'échappement,
**CARACTERISE EN CE QUE**
le réservoir de rétention (41) des condensats comprend un moyen de contrôle d'ouverture (50) du conduit d'éjection, ledit moyen de contrôle (50) comprenant un conduit de circulation (44) des condensats comportant deux branches successives (45,46) de circulation d'axe vertical et de sens opposé.

2. Circuit de gaz brulés (16) selon la revendication 1, **caractérisé en ce que** le circuit de suppression (40) des condensats comporte des moyens de recueil des condensats agencés dans le carter (23) du refroidisseur (22) à l'extrémité aval (31) dudit carter.

3. Circuit de gaz brulés (16) selon la revendication 2, **caractérisé en ce que** les moyens de recueil comprennent une paroi de recueil (28) agencée à une extrémité aval (31) du refroidisseur (22) et vers laquelle sont dirigés les gaz recirculés, et une poche de recueil (33) agencée au pied de ladite paroi de recueil.

4. Circuit de gaz brulés (16) selon la revendication 2, **caractérisé en ce que** les moyens de recueil comprennent un déflecteur (35) agencé à l'extrémité aval (31) dudit refroidisseur pour cacher le débouché (40d) du circuit de suppression dans le carter (23) de refroidisseur.

5. Circuit de gaz brulés (16) selon l'une quelconque des revendications 2 à 4, **caractérisé en ce que** les moyens de recueil comprennent un impacteur (22i) agencé dans le carter (23) de refroidisseur.

6. Circuit de gaz brulés (16) selon l'une quelconque des revendications précédentes, **caractérisé en ce que** le réservoir de rétention (41) des condensats est agencé en dessous du carter (23) de refroidisseur selon un axe vertical Z.

7. Circuit de gaz brulés (16) selon l'une quelconque des revendications précédentes, **caractérisé en ce que** le conduit de circulation (44) des condensats présente une partie en permanence immergée apte à empêcher le passage des gaz brulés recirculés.

8. Circuit de gaz brulés (16) selon l'une quelconque des revendications précédentes, **caractérisé en ce que** le moyen de contrôle (50) comprend un clapet d'ouverture (51) piloté apte à obturer/ouvrir le débouché des condensats dans la conduite de sortie d'échappement (30).

## Patentansprüche

1. Niederdruckkreislauf (16) für rezirkulierte Auspuffgase eines Kraftfahrzeugverbrennungsmotors, umfassend:
- eine Schadstoffentfernungsvorrichtung (12), die strömungstechnisch stromabwärts mit einem Abgasauslassrohr (30) verbunden ist und mit
- einem Auspuffgaskühler (22), der mit einem Auspuffgasrezirkulationskreislauf verbunden ist,
wobei der Kühler (22) einen Kondensatunterdrückungskreislauf (40) umfasst, der an einem ersten Ende in ein stromabwärtiges Ende (31) des Kühlers und an einem zweiten Ende in das Abgasauslassrohr (30) mündet, wobei der Unterdrückungskreislauf (40) ferner einen Kondensatrückhaltebehälter (41) und ein Kondensatausstoßrohr aufweist, das mit dem Rückhaltebehälter (41) verbunden ist und in das Abgasauslassrohr mündet,
**DADURCH GEKENNZEICHNET, DASS**
der Kondensatrückhaltebehälter (41) ein Mittel zum Steuern der Öffnung (50) des Ausstoßrohrs umfasst, wobei das Steuermittel (50) ein Kondensatzirkulationsrohr (44) umfasst, das zwei aufeinanderfolgende Zirkulationszweige (45, 46) mit vertikaler und entgegengesetzter Achse aufweist.

2. Auspuffgaskreislauf (16) nach Anspruch 1, **dadurch gekennzeichnet, dass** der Kondensatunterdrückungskreislauf (40) Mittel zum Sammeln von Kondensaten aufweist, die in dem Gehäuse (23) des Kühlers (22) an dem stromabwärtigen Ende (31) des Gehäuses angeordnet sind.

3. Auspuffgaskreislauf (16) nach Anspruch 2, **dadurch gekennzeichnet, dass** die Sammelmittel eine Sammelwand (28), die an einem stromabwärtigen Ende (31) des Kühlers (22) angeordnet ist und zu der die rezirkulierten Gase geleitet werden, und einen Sammelbeutel (33) umfassen, der an dem Fuß der Sammelwand angeordnet ist.

4. Auspuffgaskreislauf (16) nach Anspruch 2, **dadurch gekennzeichnet, dass** die Sammelmittel ein Lüfterblech (35) umfassen, das an dem stromabwärtigen Ende (31) des Kühlers angeordnet ist, um den Ausgang (40d) des Unterdrückungskreislaufs in dem Kühlergehäuse (23) zu verbergen.

5. Auspuffgaskreislauf (16) nach einem der Ansprüche 2 bis 4,
**dadurch gekennzeichnet, dass** die Sammelmittel einen Impaktor (22i) umfassen, der in dem Kühlergehäuse (23) angeordnet ist.

6. Auspuffgaskreislauf (16) nach einem der vorstehenden Ansprüche,
**dadurch gekennzeichnet, dass** der Kondensatrückhaltebehälter (41) entlang einer vertikalen Z-Achse unterhalb des Kühlergehäuses (23) angeordnet ist.

7. Auspuffgaskreislauf (16) nach einem der vorstehenden Ansprüche,
**dadurch gekennzeichnet, dass** das Kondensatzirkulationsrohr (44) einen dauerhaft eingetauchten Teil vorweist, der geeignet ist, den Durchtritt der rezirkulierten Auspuffgase zu verhindern.

8. Auspuffgaskreislauf (16) nach einem der vorstehenden Ansprüche,
**dadurch gekennzeichnet, dass** das Steuermittel (50) ein Ventil (51) mit gesteuerter Öffnung umfasst, das geeignet ist, den Kondensatausgang in dem Abgasauslassrohr (30) zu schließen/öffnen.

## Claims

1. Low-pressure recirculated flue gas circuit (16) for an internal combustion engine of a motor vehicle, comprising:
- a pollution control device (12) connected downstream by means of aeraulics to an exhaust outlet pipe (30) and to
- a flue gas cooler (22) connected to a flue gas recirculation circuit,
the cooler (22) comprising a condensate removal circuit (40) opening at a first end into a downstream end (31) of the cooler and at a second end into the exhaust outlet pipe (30), the removal circuit (40) further comprising a condensate retention reservoir (41) and a condensate ejection pipe connected to the retention reservoir (41) and opening into the exhaust outlet pipe,
**CHARACTERIZED IN THAT**
the condensate retention reservoir (41) comprises a means (50) for controlling the opening of the ejection pipe, the control means (50) comprising a condensate circulation pipe (44) comprising two successive circulation arms (45, 46) having a vertical axis and opposite directions.

2. Flue gas circuit (16) according to claim 1, **characterized in that** the condensate removal circuit (40) comprises condensate collection means arranged in the casing (23) of the cooler (22) at the downstream end (31) of the casing.

3. Flue gas circuit (16) according to claim 2, **characterized in that** the collection means comprise a collection wall (28) arranged at a downstream end (31) of the cooler (22) and toward which the recirculated gases are directed, and a collection pocket (33) arranged at the foot of the collection wall.

4. Flue gas circuit (16) according to claim 2, **characterized in that** the collection means comprise a deflector (35) arranged at the downstream end (31) of the cooler to conceal the outlet (40d) of the removal circuit in the cooler casing (23).

5. Flue gas circuit (16) according to any of claims 2 to 4, **characterized in that** the collection means comprise an impactor (22i) arranged in the cooler casing (23).

6. Flue gas circuit (16) according to any of the preceding claims,
**characterized in that** the condensate retention reservoir (41) is arranged below the cooler casing (23) along a vertical Z axis.

7. Flue gas circuit (16) according to any of the preceding claims,
**characterized in that** the condensate circulation pipe (44) has a permanently immersed portion capable of preventing the passage of recirculated flue gases.

8. Flue gas circuit (16) according to any of the preceding claims,
**characterized in that** the control means (50) comprises an operated opening valve (51) capable of closing/opening the condensate outlet in the exhaust outlet pipe (30).
